# EUROPÄISCHE PATENTSCHRIFT

(11) **EP 2 253 260 B1**
(45) Veröffentlichungstag und Bekanntmachung des Hinweises auf die Patenterteilung: **12.07.2017**
(21) Anmeldenummer: 10004844.6
(22) Anmeldetag: 07.05.2010
(51) Int. Cl.: F16L 25/01, F16L 37/084, A47L 9/24

(54) **Steckbares Rohrsystem für einen Staubsauger**
Pluggable tube system for a vacuum cleaner
Système de tuyauterie enfichable pour un aspirateur

(30) Priorität: 15.05.2009 DE 102009021595
(43) Veröffentlichungstag der Anmeldung: 24.11.2010
(73) Patentinhaber: Fischer Rohrtechnik GmbH, 77855 Achern-Fautenbach (DE)
(72) Erfinder: Cordes, Martin, 59846 Sundern (DE); Cordes, Stefan, 59821 Arnsberg (DE)
(74) Vertreter: Gesthuysen Patent- und Rechtsanwälte

(56) Entgegenhaltungen:
- US-A- 3 569 903
- US-A- 5 799 984

## Beschreibung

Die Erfindung betrifft ein steckbares Rohrsystem für einen Staubsauger, mit wenigstens einem ersten Rohr, einem zweiten Rohr und mit einer Kupplung zur lösbaren Verbindung des ersten Rohres mit dem zweiten Rohr, wobei die Kupplung ein Führungselement und eine Hebeltaste aufweist, wobei das Führungselement an der Außenseite der Wand des ersten Rohres angeordnet ist, die Hebeltaste im Führungselement um eine Kippachse bewegbar gelagert ist, die Hebeltaste durch die Kraft wenigstens eines ersten Federelements in eine Rastposition verbringbar ist, und die Hebeltaste an der Unterseite eine Rastnase aufweist, wobei die Wand des ersten Rohres durch eine Öffnung für die Rastnase der Hebeltaste durchgreifbar ist und wobei durch ein Eingreifen der Rastnase in eine Rastausnehmung des zweiten Rohres eine mechanische Verbindung zwischen dem ersten Rohr und dem zweiten Rohr herstellbar ist.

Steckbare Rohrsysteme für Staubsauger sind mit einer Vielzahl von Kupplungen und Rastmechanismen bekannt, die es ermöglichen, die Länge des Rohrsystems durch Teleskopieren von wenigstens zwei Rohren flexibel einzustellen. Eine Konstruktionsvariante, beispielsweise nach der DE 197 02 464; sieht vor, dass ein am ersten äußeren Rohr befestigtes Rastelement in eine Rasteinrichtung am zweiten, inneren Rohr eingreift und so ein Verschieben der Rohre relativ zueinander blockiert.

Neben dem mechanischen Fixieren der Rohre soll jedoch auch eine Ableitung von statischen Spannungen gewährleistet werden, die beispielsweise durch das Bewegen eines Saugkopfes auf einem Untergrund oder durch den Luftstrom entstehen. Spannungen werden üblicherweise vom Saugkopf über die metallischen Rohrleitungen des Staubsaugers bis zum Griffstück des Staubsaugers abgeleitet; vom Griffstück des Staubsaugers erfolgt die Ableitung mit einer geeigneten Einrichtung bis zum Schutzleiter einer elektrischen Anschlussdose. Im Stand der Technik erfolgt die elektrische Kontaktierung der einzelnen Rohre untereinander - bei teleskopierbaren Rohrsystemen - und auch die Kontaktierung des letzten, oberen Rohres mit dem Griffstück häufig mit federnden Schleifkontakten, die an einer Rohrwand befestigt sind und einen elektrisch leitenden Kontakt mit einer weiteren Rohrwand herstellen.

Ein wesentlicher Nachteil der aus dem Stand der Technik bekannten Methode zur Ableitung von statischen Spannungen ist, dass eine Vielzahl von zusätzlichen Bauteilen für die Kontaktierung der Rohre untereinander und die Kontaktierung des letzten, oberen Rohres mit dem Handgriff gefertigt und montiert werden muss.

Der vorliegenden Erfindung liegt daher die Aufgabe zugrunde, ein steckbares Rohrsystem für einen Staubsauger anzugeben, das eine zuverlässige Ableitung induzierter Ladungen innerhalb des Rohrsystems sicherstellt, aber gleichzeitig einfach herzustellen und zu montieren ist.

Die vorgenannte Aufgabe wird erfindungsgemäß bei einem steckbaren Rohrsystem für Staubsauger der eingangs genannten Art gelöst, indem zumindest in der Rastposition der Hebeltaste mit dem ersten Federelement eine elektrisch leitende Verbindung zwischen dem ersten Rohr und dem zweiten Rohr herstellbar ist. Das Federelement ist aus einem leitfähigen Material hergestellt und derart angeordnet, dass wenn das zweite Rohr in das erste Rohr eingebracht und verrastet ist, ein elektrisch leitender Kontakt zwischen den Wandungen der beiden Rohre hergestellt ist. Das Federelement erfüllt dabei eine Doppelfunktion, wobei es zum einen die Rückstellkraft aufbringt, um die Hebeltaste in ihre Rastposition zu verbringen und zum anderen gleichzeitig einen elektrisch leitenden Kontakt in dem Rohrsystem herstellt, der die Ableitung induzierter Ladungen sicherstellt, eine Erdung des Rohrsystems vorausgestetzt.

Die Ableitung von statischen Spannungen ist nur bei Staubsaugerrohren von Bedeutung, die aus einem leitfähigen Metall, z.B. einem hochlegierten Stahl, gefertigt sind. Eine direkte Kontaktierung der leitfähigen Rohrwand ist dabei oftmals nicht möglich, da die Rast-, Steck- und Verbindungseinrichtungen üblicherweise aus Kunststoff gefertigt sind, der die einzelnen Rohre voneinander isoliert. Über das Federelement kann dieser Kontakt erfindungsgemäß zwischen den Rohrwänden wieder hergestellt werden. Das erfindungsgemäße steckbare Rohrsystem hat den Vorteil, dass es weniger Bauteile als die aus dem Stand der Technik bekannten steckbaren Rohrsysteme benötigt, da die Funktion zweier einzelner Bauteile, nämlich die der Rückstellfeder der Hebeltaste und die des federnden Kontaktelements, nun von einem Bauteil - dem ersten Federelement - ausgeführt werden.

Im Normalzustand wird die Hebeltaste durch das erste Federelement in der Rastposition gehalten, wobei die Hebeltaste entweder durch das Einbringen des zweiten Rohres und dadurch erfolgenden Druck gegen die Rastnase oder durch das Betätigen der Hebeltaste gegen die Kraft des ersten Federelements in eine Freigabeposition verbringbar ist. In der Freigabeposition bewirkt das erste Federelement eine Rückstellkraft in Richtung der Rastposition auf die Hebeltaste. Für den Fall, dass die Freigabeposition durch das Einbringen des zweiten Rohres erreicht wurde, erfolgt das Rückstellen der Rastnase bzw. der Hebeltaste in die Rastposition durch das erste Federelement, sobald eine Rastausnehmung unterhalb der Rastnase positioniert ist. Das Eingreifen der Rastnase in eine Rastausnehmung des zweiten Rohres fixiert die beiden Rohre relativ zueinander. Durch Betätigen der Hebeltaste gegen die Kraft des ersten Federelements ist die Hebeltaste wieder in eine Freigabeposition verbringbar, so dass die Rastnase aus der Rastausnehmung des zweiten Rohres herausgehoben wird und eine Bewegung des ersten Rohres gegenüber dem zweiten Rohr freigegeben wird.

Die Hebeltaste ist bevorzugt derart ausgestaltet, dass in der Mitte, etwa auf der Hälfte ihrer Länge, eine Kippachse vorgesehen ist, wobei auf der einen Seite der Kippachse an der Unterseite der Hebeltaste eine Rastnase vorgesehen ist und auf der anderen Seite der Kippachse das erste Federelement positioniert ist, so dass eine Wippbewegung der Hebeltaste um die Kippachse, gegen die Federkraft des ersten Federelements möglich ist. Diese Ausgestaltung der Hebeltaste ermöglicht ein einfaches Fixieren und Einrasten der Rastnase in eine Rastausnehmung des zweiten Rohres. Es hat sich zudem als vorteilhaft herausgestellt, die Kippachse der Hebeltaste nicht mittig, sondern etwas weiter entfernt von der Rastnase vorzusehen, so dass die Rastnase nahezu senkrecht aus der Rastausnehmung entnehmbar ist, da hierdurch der Schwenkradius der Rastnase an der Hebeltaste vergrößert wird.

Das erste Federelement wirkt mit seiner Federkraft an der Unterseite der Hebeltaste, so dass die Hebeltaste durch die Kraft des ersten Federelements in die Rastposition verbringbar ist. Um die Federkraft zum Halten der Hebeltaste in der Rastposition zu verstärken und damit beispielsweise eine zusätzliche Sicherheit gegen ein ungewolltes Lösen der Rastverbindung sicherzustellen, ist gemäß einer bevorzugten Ausgestaltung des steckbaren Rohrsystems vorgesehen, dass die Kupplung ein zweites Federelement aufweist, das zusätzlich zu dem ersten Federelement eine gleichwirkende Kraft aufbringt, mit der die Hebeltaste in die Rastposition verbringbar ist. Als sehr vorteilhaft hat es sich herausgestellt, wenn das zweite Federelement in Form einer Torsionstabfeder ausgestaltet ist, die gleichzeitig die Kippachse der Hebeltaste über ihre Längserstreckung darstellt, so dass bei Verbringen der Hebeltaste in die Freigabeposition, die Torsionstabfeder durch Neigen der Hebeltaste tordiert wird, wodurch eine Rückstellkraft auf die Hebeltaste wirkt, die diese von der Freigabeposition in die Rastposition verbringt. Neben der Torsionstabfeder wirkt auch in der Freigabeposition zusätzlich das erste Federelement an der Unterseite der Hebetaste, so dass beide Federn gleichzeitig eine Rückstellkraft in die Rastposition auf die Hebeltaste aufbringen. Durch die Kraft der beiden Federn wird ein zuverlässiges und sicheres Verrasten der Rastnase in einer Ausnehmung des zweiten Rohres gewährleistet.

Besonders bevorzugt ist zudem, dass das Führungselement, die Hebeltaste und das zweite Federelement einstückig ausgebildet sind. Einstückig meint in diesem Fall, dass die drei Elemente zu einem Bauteil zusammengefasst sind und beispielsweise in einem Spritzgussprozess zusammenhängend hergestellt werden, so dass die Hebeltaste über das zweite Federelement - die Torsionstabfeder - mit dem Führungselement verbunden ist. Die Torsionstabfeder besteht dabei aus dem gleichen Material wie die Hebeltaste, und das Führungselement und ist mit diesen Bauteilen fest verbunden. Die Grundform des Führungselements ist oval, recheckig, rund oder mit abgerundeten Kanten vorgesehen, wobei die Seitenflanke des Führungselements vorzugsweise zueinander geneigt vorgesehen sind, wodurch sich der Bauraum reduzieren lässt.

Im entspannten Zustand des zweiten Federelements - der Torsionstabfeder - ist die Oberseite der Hebeltaste auf einem Niveau mit dem Rahmen bzw. den Flanken des Führungselements. Das Entstehen einer Federkraft durch die Torsionstabfeder erfolgt durch Auslenken der Hebeltaste aus dieser Position - der Rastposition - in die Freigabeposition.

Das Führungselement mit der Hebeltaste ist an der Wand des ersten Rohres befestigt. Damit ein Fixieren der beiden Rohre relativ zueinander erfolgen kann, durchgreift die Rastnase der Hebeltaste das erste Rohr durch eine Öffnung in der Wand. Gemäß einer bevorzugten Ausgestaltung ist es nun vorgesehen, dass auch das erste Federelement die Wand des ersten Rohres in dieser gleichen Öffnung durchtritt. Das erste Federelement durchtritt die Wand, um auf beiden Seiten der Wand eine Federkraft aufzubringen, aber gleichzeitig eine elektrisch leitende Verbindung zwischen dem äußeren, ersten Rohr und dem inneren, zweiten Rohr herzustellen. Es ist jedoch auch vorgesehen, dass die Rastnase und das erste Federelement die Wand des ersten Rohres nicht nur in einer gemeinsamen Öffnung durchtreten, sondern bevorzugt in mehreren gemeinsamen Öffnungen die Wand des Rohres durchtreten. Alternativ zu einer oder mehreren Öffnungen, die von dem ersten Federelement und der Rastnase gemeinsam durchtreten werden, ist auch vorgesehen, dass das erste Federelement die Wand in einer ersten Öffnung und das zweite Federelement die Wand des ersten Rohres in einer zweiten Öffnung durchtritt.

Das erfindungsgemäße steckbare Rohrsystem sieht in bevorzugten Ausgestaltungen zwei Varianten des ersten Federelements vor. Gemäß einer ersten vorteilhaften Variante des steckbaren Rohrsystems bildet das zweite, innere Rohr ein erstes Widerlager für das erste Federelement und die Unterseite der Hebeltaste ein zweites Widerlager für das erste Federelement. Die Federkraft entsteht folglich zwischen der Unterseite der Hebeltaste und der Wand des zweiten Rohres. Die Feder ist dabei derart gestaltet, dass sie sich an der Unterseite der Hebeltaste abstützt, die Rohrwand des ersten Rohres durchtritt und sich auf der anderen Seite der Rohrwand an der Rohrwand des zweiten Rohres federnd abstützt. In diesem Zustand weist das erste Federelement eine geringe Vorspannung auf, da sich die Hebeltaste in der Rastposition befindet. Wird nun die Hebeltaste aus der Rastposition in die Freigabeposition verbracht, wird die Hebeltaste auf der Seite des ersten Federelements heruntergedrückt, so dass die Feder zwischen der Unterseite der Hebeltaste und der Wand des zweiten Rohres gestaucht wird und sich die Federkraft erhöht, wodurch eine Rückstellkraft in die Rastposition erzeugt wird. Wenn kein zweites Rohr in das erste Rohr eingebracht ist, ist das erste Federelement bei dieser Variante spannungsfrei.

Das erste Federelement ist, gemäß einer vorteilhaften Ausgestaltung, innerhalb der Öffnung, durch die das erste Federelement die Wand des ersten Rohres durchtritt, schwenkbar gehalten. Die Wand des zweiten Rohres und die Unterseite der Hebeltaste begrenzen die räumliche Beweglichkeit des ersten Federelements, woraus zwei entgegengesetzte Kräfte resultieren. Die entgegengesetzten Kräfte wirken auf die Hebelarme des Federelements, so dass zwei gegenläufige Momente erzeugt werden. Die gegenläufigen Momente rufen eine Stauchung der Feder hervor, da die Feder den Momenten nicht ausweichen kann. Das Federelement ist zwar schwenkbar in der Öffnung gelagert, kann sich jedoch nicht derart in der Öffnung verschieben, dass dadurch die Momente reduziert werden. Durch die Stauchung des Federelements wird eine Federkraft erzeugt, die den momenterzeugenden Kräften entgegenwirkt, so dass das erste Federelement folglich gegen die Wand des ersten Rohres und gegen die Unterseite der Hebeltaste drückt.

Eine weitere Variante des steckbaren Rohrsystems sieht vor, dass das erste Federelement derart ausgestaltet ist, dass die Wand des ersten Rohres ein zentrales Widerlager für das erste Federelement darstellt. Mit dem ersten Federelement werden zwei getrennte Federkräfte erzeugt, zum einen zwischen der Unterseite der Hebeltaste und der Wand des ersten Rohres und zum anderen zwischen der Außenseite der Wand des zweiten Rohres und der Wand des ersten Rohres. In beiden Fällen entsteht die Federkraft durch Stauchen des ersten Federelements gegen die Wand des ersten Rohres. Obwohl durch das erste Federelement in diesem Fall zwei getrennte Federkräfte erzeugbar sind, wird trotzdem eine elektrisch leitende Verbindung zwischen dem ersten Rohr und dem zweiten Rohr hergestellt, indem das erste Federelement auch in diesem Fall die Wand des ersten Rohres durchgreift. Der wesentliche Unterschied ist, dass das Federelement an der Wand des ersten Rohres form-, stoff- oder kraftschlüssig befestigt ist bzw. sich an diesem von zwei Seiten abstützt.

Gemäß einer bevorzugten Ausgestaltung des steckbaren Rohrsystems ist vorgesehen, dass das zweite Rohr eine einzige Rastausnehmung und wenigstens einen elektrisch leitenden Teilbereich aufweist. Das erste und das zweite Rohr können durch die einzige Rastausnehmung nur in einer Position miteinander fixiert werden, beispielsweise so, dass das zweite Rohr lediglich in einem kurzen Teilbereich in das erste Rohr eingesteckt ist. Der elektrisch leitende Teilbereich ist insbesondere für die Kontaktierung mit dem elektrisch leitenden ersten Federelement von Bedeutung, wobei der elektrisch leitende Teilbereich geerdet ist, so dass durch das erste Federelement eine elektrisch leitende Verbindung des ersten Rohres mit dem geerdeten, elektrisch leitenden Teilbereich des zweiten Rohres herstellbar ist.

Ein elektrisch leitender Teilbereich ist insbesondere dann wichtig, wenn es sich bei dem zweiten Rohr um das Griffstück eines Staubsaugers handelt, das beispielsweise aus Kunststoff gefertigt ist. Der elektrisch leitende Teil- oder Kontaktbereich an dem aus Kunststoff gefertigten Griffstück eines Staubsaugers ist beispielsweise in Form einer Metallplatte, eines Metallstabes oder anderweitig ausgestaltet. Wichtig ist, dass dieser elektrisch leitende Teilbereich eine Verbindung zur Erde, beispielsweise eine Verbindung zu dem Schutzleiter einer elektrischen Anschlussdose, aufweist. Zudem ist der elektrisch leitende Teilbereich derart ausgestaltet und im Griffstück des Staubsaugers angeordnet, dass der Benutzer des Staubsaugers bei üblicher Verwendung des Griffstückes mit mindestens einer Hand in Kontakt mit dem elektrisch leitenden Teilbereich steht bzw. über ein elektrisch leitendes Material mit dem elektrisch leitenden Teilbereich in Verbindung steht. Falls das Griffstück des Staubsaugers vollständig aus einem elektrisch leitfähigen Material vorgesehen ist, ist das gesamte Griffstück mit dem Schutzleiter kontaktiert, so dass der elektrisch leitende Teilbereich entbehrlich ist.

Für den Fall, dass das erste und das zweite Rohr zueinander relativ verstellbar - teleskopierbar - sein sollen, ist es gemäß einer weiteren Ausgestaltung des steckbaren Rohrsystems vorgesehen, dass das zweite Rohr eine Vielzahl von Rastausnehmungen aufweist, wobei die Rastnase des ersten Rohres in jede dieser Rastausnehmungen eingreifen kann, wodurch ein Fixieren der beiden Rohre relativ zueinander in der jeweiligen Position erfolgt. Das erste und das zweite Rohr sind dabei derart ausgestaltet, dass sie ineinander verschiebbar und vorzugsweise auch verdrehsicher geführt sind. Um Saugverluste durch Eintreten von Nebenluft in das steckbare Rohrsystem bestmöglich zu reduzieren ist bevorzugt vorgesehen, dass die Rastausnehmungen des zweiten Rohres durchbrechungsfrei sind und lediglich eine Vertiefung bzw. einen Rücksprung gegenüber dem Rest der Rohrwand darstellen. Die Kanten der Rücksprünge müssen dabei jedoch eine entsprechend scharfe Kontur aufweisen, damit die

Rastnase beispielsweise formschlüssig verrasten kann und kein Abrutschen der Rastnase über eine beispielsweise abgerundete Kante erfolgt. Die Herstellung der Rastausnehmung kann z. B. durch Tiefziehen erfolgen.

Die vorliegende Erfindung hat das Ziel, eine Ableitung von statischen Spannungen bzw. induzierten Ladungen in einem steckbaren Rohrsystem für Staubsauger zuverlässig zu gewährleisten und dessen Herstellung zu vereinfachen.

Dieses Ziel wird gemäß einer weiteren Variante des steckbaren Rohrsystems der eingangs genannten Art gelöst, indem über die Rastnase eine elektrisch leitende Verbindung zwischen dem ersten und dem zweiten Rohr herstellbar ist. Die Rastnase durchtritt - wie zuvor bereits erläutert - die Wand des ersten Rohres um eine mechanische Verbindung mit dem zweiten Rohr herzustellen. Dabei steht die Rastnase in Kontakt mit der Wand des ersten Rohres und der Wand des zweiten Rohres im Bereich der Rastausnehmung und ist - zumindest teilweise - elektrisch leitfähig. Die ohnehin notwendige Rastnase übernimmt bei dieser Variante zusätzlich die Aufgaben eines Kontaktelements zur Herstellung der elektrisch leitenden Verbindung zwischen den beiden Rohren, wodurch ein Bauteil entbehrlich und die Herstellung vereinfacht wird.

Als sehr vorteilhaft hat es sich gemäß einer bevorzugten Ausgestaltung des steckbaren Rohrsystems herausgestellt, wenn auf die Rastnase eine Kontaktkappe aus einem elektrisch leitenden Material aufgesetzt ist, so dass über diese Kontaktkappe ein elektrisch leitender Kontakt hergestellt ist. So weist die Kontaktkappe im Bereich der Wand des ersten Rohres beispielsweise eine Kontaktkante auf, die an der Wand des ersten Rohres anliegt, wobei die Kontaktkappe an der Unterseite mit der Wand des zweiten Rohres in Kontakt steht. Dabei hat es sich als sehr vorteilhaft herausgestellt, wenn die Rastausnehmung des zweiten Rohres durchbrechungsfrei ist, so dass eine einfache elektrische Kontaktierung der Kontaktkappe auf der Rastnase mit dem Bereich der Rastausnehmung des zweiten Rohres erfolgen kann. Bevorzugt ist es auch vorgesehen, dass die Rastnase selbst aus einem elektrisch leitenden Material hergestellt ist und an der Hebeltaste stoff-, kraft- oder formschlüssig befestigt ist.

Die elektrisch leitende Verbindung soll insbesondere in der Rastposition der Hebeltaste bestehen. Damit diese Verbindung stets sichergestellt ist, ist gemäß einer vorteilhaften Ausgestaltung vorgesehen, dass die Kotaktkappe auf der Rastnase federnd gelagert ist, so dass eine elektrisch leitende Verbindung auch bei einem Spiel in der Kupplung sichergestellt ist. Dafür ist beispielsweise eine Druckfeder innerhalb der Rastnase vorgesehen, die die Kontaktkappe an der Unterseite der Rastnase beweglich positioniert. Des Weiteren ist auch vorgesehen, dass die Kontaktkappe selbst federartige Teilbereiche aufweist, so dass die Kontaktkappe flexibel eventuell vorhandenes Spiel ausgleicht und eine kontinuierliche elektrische Kontaktierung gewährleistet. Das steckbare Rohrsystem, mit der Rastnase als elektrisch leitende Verbindung zwischen den beiden Rohren, ist mit den gleichen vorteilhaften Merkmalen austattbar, die bereits für das steckbare Rohrsystem mit dem ersten Federelement als elektrisch leitende Verbindung erläutert worden sind.

Im Einzelnen gibt es nun eine Vielzahl von Möglichkeiten das erfindungsgemäße steckbare Rohrsystem für einen Staubsauger auszugestalten und weiterzubilden. Dazu wird verwiesen sowohl auf die den Patentansprüchen 1 und 10 nachgeordneten Patentansprüche, als auch auf die nachfolgende Beschreibung von bevorzugten Ausführungsbeispielen in Verbindung mit der Zeichnung. In der Zeichnung zeigen:
- Fig. 1: ein Ausführungsbeispiel des erfindungsgemäßen steckbaren Rohrsystems für einen Staubsauger,
- Fig. 2: das Ausführungsbeispiel eines steckbaren Rohrsystems gemäß Fig. 1, ohne zweites Rohr,
- Fig. 3: ein zweites Ausführungsbeispiel des erfindungsgemäßen steckbaren Rohrsystems für einen Staubsauger,
- Fig. 4: ein drittes Ausführungsbeispiel des steckbaren Rohrsystems für einen Staubsauger, mit einem teleskopierbaren zweiten Rohr und,
- Fig. 5: ein Ausführungsbeispiel des steckbaren Rohrsystem für einen Staubsauger, mit einer Rastnase als elektrisch leitendes Verbindungselement.

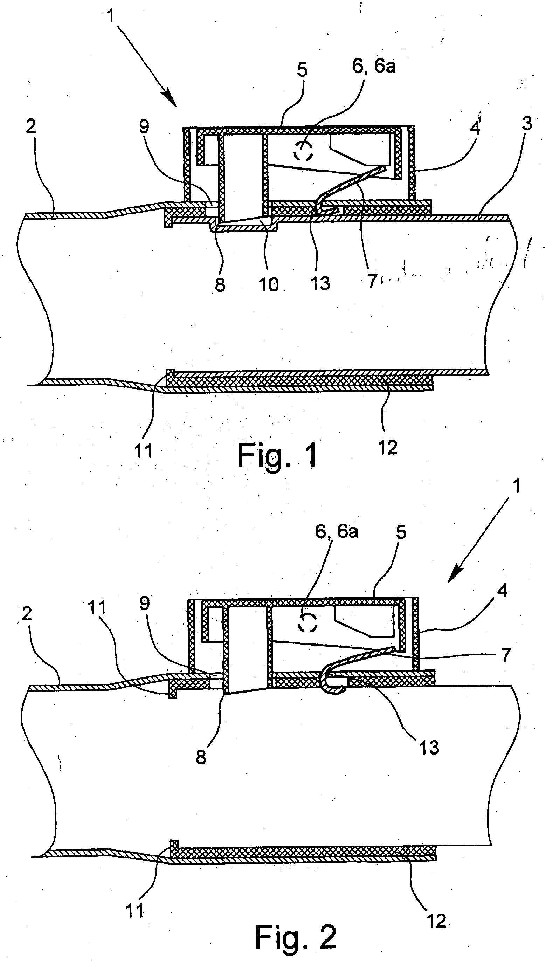

Fig. 1 zeigt ein Ausführungsbeispiel eines steckbaren Rohrsystems 1 für einen Staubsauger, zur Herstellung einer Verbindung zwischen einem ersten Rohr 2 und einem zweiten Rohr 3. Die Verbindung wird mit einer Kupplung hergestellt, die ein Führungselement 4 und eine Hebeltaste 5 aufweist, wobei das Führungselement 4 an der Außenseite der Wand des ersten Rohres 2 angeordnet und befestigt ist. Die Hebeltaste 5 ist im Führungselement 4 um eine Kippachse 6 bewegbar gelagert, wobei bei diesem Ausführungsbeispiel die Kippachse 6 als Torsionstabfeder 6a ausgeführt ist. Die Hebeltaste 5 ist durch die Kraft der Torsionstabfeder 6a und zusätzlich durch die Kraft eines ersten Federelements 7 in eine Rastposition verbringbar.

An der Unterseite steht die Hebeltaste 5 - in Fig. 1 auf der rechten Seite der Kippachse 6 - mit dem ersten Federelement 7 in Kontakt. Auf der anderen Seite der Kippachse 6 weist die Hebeltaste 5 an der Unterseite eine Rastnase 8 auf. Die Rastnase 8 durchgreift die Wand des ersten Rohres 2 in einer Öffnung 9 und greift auf der anderen Seite der Wand in eine Rastausnehmung 10 des zweiten Rohres 3 ein. Durch das Eingreifen der Rastnase 8 in die Rastausnehmung 10 des zweiten Rohres 3 wird eine formschlüssige Verbindung zwischen dem ersten Rohr 2 und dem zweiten Rohr 3 hergestellt. Dadurch, dass das Führungselement 4 am ersten Rohr 2 befestigt ist und die Rastnase 8 formschlüssig in die Rastausnehmung 10 eingreift, ist eine Relativbewegung des ersten Rohrs 2 zum zweiten Rohr 3 in der Rastposition blockiert. Die Rastnase 8 ist an der Unterseite in Längsrichtung des ersten Rohres 2 angeschrägt, damit das Entnehmen der Rastnase 8 aus der Rastausnehmung 10 vereinfacht ist und damit eine Blockade in der Freigabeposition verhindert wird. Die Hebeltaste 5, die Torsionstabfeder 6a und das Führungselement 4 sind bei dieser Ausgestaltungsvariante einstückig hergestellt und miteinander verbunden.

Fig. 1 zeigt die Hebeltaste 5 in der Rastposition, wobei durch die Rastnase 8 und die Rastausnehmung 10 eine formschlüssige Verbindung zwischen dem ersten Rohr 2 und dem zweiten Rohr 3 hergestellt ist. Das zweite Rohr 3 ist zusätzlich gegen eine Anschlagkante 11 einer innerhalb des ersten Rohres 2 angeordneten Kunststoffmuffe 12 abgeschlagen. Bei dem zweiten Rohr 3 handelt es sich bei diesem Ausführungsbeispiel um das Griffstück eines Staubsaugers, das aus einem elektrisch leitfähigen Material ausgeführt ist, so dass ein elektrisch leitender Teilbereich im Bereich des ersten Federelements entbehrlich ist.

Das erste Federelement 7 steht in der in Fig. 1 dargestellten Rastposition unter einer geringen Vorspannung, dadurch, dass das Federelement 7 zwischen der Wand des zweiten Rohres 3 und der Unterseite der Hebeltaste 5 gestaucht ist. Das erste Federelement 7 besteht aus einem elektrisch leitfähigen Material und stellt eine elektrisch leitende Verbindung zwischen dem ersten Rohr 2 und dem zweiten Rohr 3 her. Bei diesem Ausführungsbeispiel stellt die Unterseite der Hebeltaste 5 ein erstes Widerlager und die Wand des zweiten Rohres 3 ein zweites Widerlager für das erste Federelement 7 dar.

Fig. 2 zeigt das Ausführungsbeispiel gemäß Fig. 1, jedoch ohne das zweite Rohr 3. Dadurch, dass das zweite Rohr 3 nicht in das erste Rohr 2 eingebracht ist, ist das erste Federelement 7 unbelastet und grundsätzlich innerhalb der Öffnung 13 bewegbar. Fig. 2 zeigt, dass das Federelement nicht an der Unterseite der Hebeltaste 5 anliegt und in seinem unteren Bereich halbrund in den Strömungsquerschnitt des ersten Rohres 2 hineinragt. Durch Einbringen des zweiten Rohres 3 in das erste Rohr 2, drückte das zweite Rohr 3 das Federelement 7 nach oben, wodurch das Federelement 7 zwischen der Wand des zweiten Rohres 3 und der Unterseite der Hebeltaste 5 gestaucht würde. Aus dieser Stauchung des Federelements 7 resultierte eine Kraft, die die Hebeltaste 5 in die Rastposition verbrächte. Der untere Teil des Federelements 7 ist derart vorgesehen, dass er nicht zu weit und halbrund in den Strömungsquerschnitt hineinragt, damit das zweite Rohr 3 beim Einbringen in das erste Rohr 2 nicht am Federelement 7 verkantet.

Durch Einbringen - in der in Fig. 2 dargestellten Position - des zweiten Rohres 3 in das erste Rohr 2, würde zum einen das Federelement 7 gegen die Unterseite der Hebeltaste 5 gedrückt, zum anderen drückte das zweite Rohr 3 zunächst auch die Rastnase 8 aus dem Strömungsquerschnitt des ersten Rohres 2 heraus, wodurch das Federelement 7 zusätzlich gestaucht und die Torsionstabfeder 6a tordiert würde. Sobald die Rastausnehmungen 10 unterhalb der Rastnase 8 positioniert wäre, verbrächten die Federkräfte der Torsionstabfeder 6a und des Federelements 7 die Rastnase 8 in die Rastausnehmung 10 und damit die Hebeltaste 5 in die Rastposition. Das in den Fig. 1 und 2 dargestellte Ausführungsbeispiel verfügt über zwei Öffnungen in der Wand des ersten Rohres 2, zum einen die Öffnungen 9 für die Rastnase 8, zum anderen die Öffnung 13 für das erste Federelement 7.

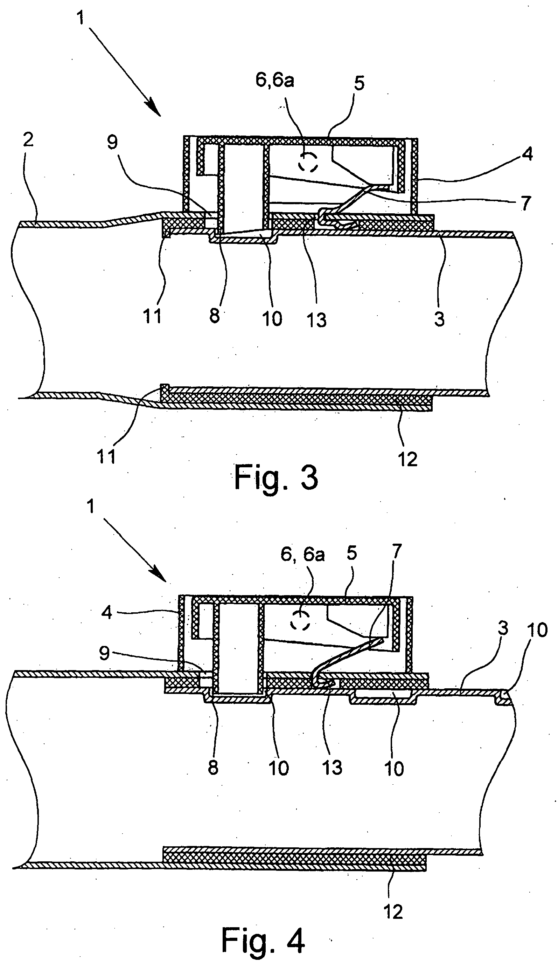

Fig. 3 zeigt ein Ausführungsbeispiel eines steckbaren Rohrsystems 1 für einen Staubsauger, wobei die Funktionalität der Hebeltaste 5 entsprechend der für die Fig. 1 und 2 bereits beschriebenen entspricht. Das Ausführungsbeispiel gemäß Fig. 3 unterscheidet sich dahingehend von denen nach den Fig. 1 und 2, dass durch das erste Federelement 7 nicht nur lediglich eine Federkraft erzeugbar ist - wie bei dem Ausführungsbeispiel gemäß Fig. 1 und 2 - sondern zwei voneinander getrennte Federkräfte. Dafür stützt sich das erste Federelement 7 im Bereich der Öffnung 13 an der Wand des ersten Rohres 2 ab, so dass eine erste Federkraft zwischen der Unterseite der Hebeltaste 5 und der Wand des ersten Rohres 2 und eine zweite Federkraft zwischen der Wand des zweiten Rohres 3 und der Wand des ersten Rohres 2 entsteht. Gemäß Fig. 3 ist das Federelement 7 formschlüssig an der Wand des ersten Rohres 2 befestigt, indem das Federelement 7 die Wand des ersten Rohres 2 - durch die Öffnung 13 - formschlüssig umgreift. Das Federelement 7 erfüllt damit die gleichen Funktionen wie das Federelement 7 gemäß dem Ausführungsbeispiel der Fig. 1 und 2, mit dem Unterschied, dass das erste Federelement 7 nicht frei beweglich ist, wenn das zweite Rohr 3 nicht eingebracht ist.

Fig. 4 zeigt ein Ausführungsbeispiel eines steckbaren Rohrsystems 1 für einen Staubsauger, bei dem das erste Rohr 2 zu dem zweiten Rohr 3 teleskopierbar ist, dadurch, dass die Rastnase 8 in eine Mehrzahl von Rastausnehmungen 10 des zweiten Rohres 3 eingreifen kann. Damit das zweite Rohr 3 innerhalb des ersten Rohres 2 verschiebbar ist, weist die Kunststoffmuffe 12 keine Anschlagkante 11 auf. Des Weiteren ist das erste Rohr 2 verjüngungsfrei ausgestaltet. Abhängig davon, in welche Rastausnehmung 10 die Rastnase 8 der Hebeltaste 5 eingreift, kann eine Position des ersten Rohres 2 zum zweiten Rohr 3 und damit die Länge des steckbaren Rohrsystems 1 eingestellt werden. Auch bei diesem Ausführungsbeispiel wird eine elektrisch leitende Verbindung durch das Federelement 7 zwischen der Wand des ersten Rohres 2 und der Wand des zweiten Rohres 3 hergestellt.

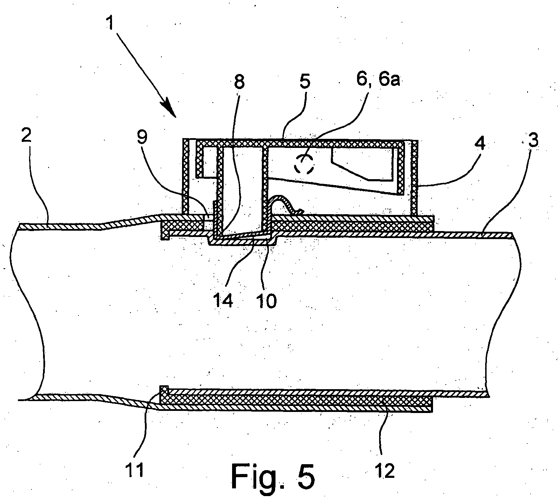

Fig. 5 zeigt ein bevorzugtes Ausführungsbeispiel des steckbaren Rohrsystems 1 für einen Staubsauger, mit der Rastnase 8 als elektrisch leitendes Verbindungselement. Die Rastnase 8 der Hebeltaste 5 ist bei diesem Ausführungsbeispiel mit einer Kontaktkappe 14 versehen. Die Kontaktkappe 14 ist aus einem elektrisch leitenden Material hergestellt und steht in der - dargestellten - Rastposition im oberen Bereich mit der Wand des ersten Rohres 2 und im unteren Bereich mit der Rastausnehmung 10 - und damit auch mit der Wand des zweiten Rohres 3 - in Kontakt. Die Rastausnehmung 10 ist durchbrechungsfrei. Die Kontaktkappe 14 stellt eine elektrisch leitende Verbindung zwischen der Wand des ersten Rohres 2 und der Wand des zweiten Rohres 3 her. Im Bereich der Wand des ersten Rohres 2 ist die Kontaktkappe 14 flexibel ausgestaltet, so dass eine kontinuierliche Kontaktierung mit der Wand des ersten Rohres 2 gewährleistet ist. Die Torsionstabfeder 6a stellt bei dieser Ausführung das einzige Federelement dar, mit dem eine rückstellende Kraft in Richtung der Rastposition auf die Hebeltaste 5 aufbringbar ist.

Selbstverständlich stellen alle dargestellten Ausführungsbeispiele nur Prinzipskizzen dar, so dass die geforderte Beweglichkeit einzelner Bauteile, insbesondere der Hebeltaste, bei der tatsächlichen Ausführung nicht durch andere Bauteile blockiert wird, sofern es nicht explizit gefordert ist.

### Bezugszeichenliste:

- 1): Steckbares Rohrsystem
- 2): erstes Rohr
- 3): zweites Rohr
- 4): Führungselement
- 5): Hebeltaste
- 6): Kippachse
- 6a): Torsionstabfeder
- 7): erstes Federelement
- 8): Rastnase
- 9): Öffnung für die Rastnase
- 10): Rastausnehmung
- 11): Anschlagkante
- 12): Kunststoffmuffe
- 13): Öffnung für das erste Federelement
- 14): Kontaktkappe

## Patentansprüche

1. Steckbares Rohrsystem (1) für einen Staubsauger, mit wenigstens einem ersten Rohr (2), einem zweiten Rohr (3) und mit einer Kupplung zur lösbaren Verbindung des ersten Rohres (2) mit dem zweiten Rohr (3), wobei die Kupplung ein Führungselement (4) und eine Hebeltaste (5) aufweist, wobei das Führungselement (4) an der Außenseite der Wand des ersten Rohres (2) angeordnet ist, die Hebeltaste (5) im Führungselement (4) um eine Kippachse (6) bewegbar gelagert ist, die Hebeltaste (5) durch die Kraft wenigstens eines ersten Federelements (7) in eine Rastposition verbringbar ist, und die Hebeltaste (5) an der Unterseite eine Rastnase (8) aufweist, wobei die Wand des ersten Rohres (2) durch eine Öffnung (9) für die Rastnase (8) der Hebeltaste (5) durchgreifbar ist, und wobei durch ein Eingreifen der Rastnase (8) in eine Rastausnehmung (10) des zweiten Rohres (3) eine mechanische Verbindung zwischen dem ersten Rohr (2) und dem zweiten Rohr (3) herstellbar ist,
**dadurch gekennzeichnet,**
**dass** zumindest in der Rastposition der Hebeltaste (5) mit dem ersten Federelement (7) eine elektrisch leitende Verbindung zwischen dem ersten Rohr (2) und dem zweiten Rohr (3) herstellbar ist.

2. Steckbares Rohrsystem (1) für einen Staubsauger nach Anspruch 1, **dadurch gekennzeichnet, dass** die Hebeltaste (5) durch Betätigen der Hebeltaste (5) gegen die Kraft wenigstens des ersten Federelements (7) in eine Freigabeposition verbringbar ist, wobei die Rastnase (8) der Hebeltaste (5) in der Freigabeposition eine Bewegung des ersten Rohrs (2) gegenüber dem zweiten Rohr (3) freigibt, insbesondere wobei die Kippachse (6) der Hebeltaste (5) etwa auf der Hälfte der Längserstreckung der Hebeltaste (5) vorgesehen ist, wobei auf einer Seite der Hebeltaste (5) das erste Federelement (7) und auf der anderen Seite der Hebeltaste (5) die Rastnase (8) vorgesehen ist.

3. Steckbares Rohrsystem (1) für einen Staubsauger nach Anspruch 1 oder 2, **dadurch gekennzeichnet, dass** die Kupplung ein zweites Federelement (6a) aufweist, mit dem eine zusätzliche Kraft aufbringbar ist, um die Hebeltaste (5) in die Rastposition zu verbringen, insbesondere ist das zweite Federelement (6a) eine Torsionstabfeder (6a), die gleichzeitig die Kippachse (6) der Hebeltaste (5) über ihre Längserstreckung darstellt.

4. Steckbares Rohrsystem (1) für einen Staubsauger nach Anspruch 3, **dadurch gekennzeichnet, dass** das Führungselement (4), die Hebeltaste (5) und das zweite Federelement (6a) einstückig ausgebildet sind, insbesondere ist die Hebeltaste (5) über das zweite Federelement (6a) mit dem Führungselement (4) verbunden.

5. Steckbares Rohrsystem (1) für einen Staubsauger nach einem der Ansprüche 1 bis 4, **dadurch gekennzeichnet, dass** in der Rastposition die Rastnase (8) der Hebeltaste (5) und das erste Federelement (7) die Wand des ersten Rohres (2) in wenigstens einer gemeinsamen Öffnung durchtreten, oder alternativ in der Rastposition die Rastnase (8) und das erste Federelement (7) die Wand des ersten Rohres (2) in jeweils getrennten Öffnungen (9, 13) durchtreten.

6. Steckbares Rohrsystem (1) für einen Staubsauger nach einem der Ansprüche 1 bis 5, **dadurch gekennzeichnet, dass** das zweite Rohr (3) ein erstes Widerlager des ersten Federelements (7) darstellt und die Unterseite der Hebeltaste (5) ein zweites Widerlager des ersten Federelements (7) darstellt, insbesondere ist mit dem ersten Federelement (7) eine Federkraft zwischen Außenseite der Wand des zweiten Rohres (3) und der Unterseite der Hebeltaste (5) erzeugbar,

7. Steckbares Rohrsystem (1) für einen Staubsauger nach einem der Ansprüche 1 bis 6, **dadurch gekennzeichnet, dass** das erste Federelement (7) in der Öffnung (13) schwenkbar gehalten ist, insbesondere sind durch das Aufbringen zweier entgegenwirkender Kräfte auf die Hebelarme des ersten Federelements (7), mittels der Hebeltaste (5) und der Wand des zweiten Rohres (3), zwei gegenläufige Momente erzeugbar, wobei mit den Momenten eine Stauchung des Federelements (7) hervorrufbar ist.

8. Steckbares Rohrsystem (1) für einen Staubsauger nach einem der Ansprüche 1 bis 5, **dadurch gekennzeichnet, dass** das erste Federelement (7) derart ausgestaltet ist, dass die Wand des ersten Rohres (2) ein Widerlager für das erste Federelement (7) darstellt, insbesondere ist mit dem ersten Federelement (7) eine Federkraft zwischen dem ersten Rohr (2) und der Unterseite der Hebeltaste (5), und eine zweite Federkraft zwischen dem ersten Rohr (2) und der Außenseite der Wand des zweiten Rohres (3) erzeugbar.

9. Steckbares Rohrsystem (1) für einen Staubsauger nach einem der Ansprüche 1 bis 8, **dadurch gekennzeichnet, dass** das zweite Rohr (3) eine einzige Rastausnehmung (10) und wenigstens einen elektrisch leitenden Teilbereich aufweist, wobei insbesondere wenigstens der elektrisch leitende Teilbereich geerdet ist, insbesondere ist das zweite Rohr (3) der Handgriff eines Staubsaugers.

10. Steckbares Rohrsystem (1) für einen Staubsauger nach einem der Ansprüche 1 bis 8, **dadurch gekennzeichnet, dass** das zweite Rohr (3) eine Vielzahl von Rastausnehmungen (10) aufweist, vorzugsweise sind die Rastausnehmungen (10) durchbrechungsfrei, insbesondere sind das erste Rohr (2) und das zweite Rohr (3) ineinander verschiebbar, wobei über ein Eingreifen der Rastnase (8) in eine beliebige Rastausnehmung (10) des zweiten Rohres (3) eine Relativposition der Rohre (2, 3) fixierbar ist.

11. Steckbares Rohrsystem (1) für einen Staubsauger, mit wenigstens einem ersten Rohr (2), einem zweiten Rohr (3) und mit einer Kupplung zur lösbaren Verbindung des ersten Rohres (2) mit dem zweiten Rohr (3), wobei die Kupplung ein Führungselement und eine Hebeltaste aufweist, wobei das Führungselement an der Außenseite der Wand des ersten Rohres angeordnet ist, die Hebeltaste im Führungselement um eine Kippachse bewegbar gelagert ist, die Hebeltaste durch die Kraft wenigstens eines ersten Federelements in eine Rastposition verbringbar ist, und die Hebeltaste an der Unterseite eine Rastnase aufweist, wobei die Wand des ersten Rohres durch eine Öffnung für die Rastnase der Hebeltaste durchgreifbar ist, und wobei durch ein Eingreifen der Rastnase in eine Rastausnehmung des zweiten Rohres eine mechanische Verbindung zwischen dem ersten Rohr und dem zweiten Rohr herstellbar ist,
**dadurch gekennzeichnet,**
**dass** über die Rastnase eine elektrisch leitende Verbindung zwischen dem ersten und dem zweiten Rohr herstellbar ist.

12. Steckbares Rohrsystem für einen Staubsauger nach Anspruch 11, **dadurch gekennzeichnet, dass** auf die Rastnase eine Kontaktkappe aus einem elektrisch leitenden Material aufgesetzt ist, über die Kontaktkappe zumindest in der Rastposition eine elektrische leitende Verbindung zwischen dem ersten und dem zweiten Rohr herstellbar ist, vorzugsweise ist die Rastausnehmung des zweiten Rohres durchbrechungsfrei, insbesondere ist die Rastausnehmung tiefgezogen, so dass die Kontaktkappe der Rastnase mit der Rastausnehmung in Kontakt verbringbar ist, bevorzugt ist die Rastnase selbst aus einem leitenden Material hergestellt.

13. Steckbares Rohrsystem für einen Staubsauger nach Anspruch 11 oder 12, **dadurch gekennzeichnet, dass** die Kontaktkappe federnd auf der Rastnase gelagert ist, so dass eine elektrisch leitende Verbindung zumindest in der Rästposition der Hebeltaste sichergestellt ist.

14. Steckbares Rohrsystem für einen Staubsauger nach einem der Ansprüche 11 bis 13, **gekennzeichnet durch** die Merkmale wenigstens eines Kennzeichenteils eines Patentanspruchs der Patentansprüche 2, 3, 4, 5, 9, oder 10.

## Claims

1. Insertable tube system (1) for a vacuum cleaner, with at least one first tube (2), a second tube (3) and a coupling for detachable connection of the first tube (2) to the second tube (3), wherein the coupling has a guide element (4) and a lever button (5), wherein the guide element (4) is located on an outer side of a wall of the first tube (2), the lever button (5) is supported in the guide element (4) to be able to move around a pivot axis (6), the lever button (5) is movable by the force of at least a first spring element (7) into a catch position, and the bottom of the lever button (5) has a catch projection (8), wherein the wall of the first tube (2) is penetrated by an opening (9) for the catch projection (8) of the lever button (5), and wherein a mechanical connection between the first tube (2) and the second tube (3) can be produced by engagement of the catch projection (8) with a catch recess (10) of the second tube (3),
**characterized in**
**that** an electrically conductive connection between the first tube (2) and the second tube (3) can be produced with the first spring element (7) in at least a catch position of the lever button (5).

2. Insertable tube system (1) for a vacuum cleaner according to claim 1, **characterized in that** the lever button (5) is movable into a release position by actuating the lever button (5) against the force of at least the first spring element (7), the catch projection (8) of the lever button (5) in the release position is released so as to permit movement of the first tube (5) relative to the second tube (3), in particular wherein the pivot axis (6) of the lever button (5) is provided roughly at half a lengthwise extension of the lever button (5), wherein the first spring element (7) is provided on one side of the lever button (5) and the catch projection (8) is provided on the other side of the lever button (5).

3. Insertable tube system (1) for a vacuum cleaner according to claim 1 or 2, **characterized in that** the coupling has a second spring element (6a) with which an additional force can be exerted to move the lever button (5) into the catch position, in particular, the second spring element (6a) is a torsion bar spring (6a) which, at the same time, constitutes the pivot axis (6) of the lever button (5) over its longitudinal extension.

4. Insertable tube system (1) for a vacuum cleaner according to claim 3, **characterized in that** the guide element (4), the lever button (5) and the second spring element (6a) are made in one piece, in particular, the lever button (5) is connected to the guide element (4) via the second spring element (6a).

5. Insertable tube system (1) for a vacuum cleaner according to any one of claims 1 to 4, **characterized in that** the catch projection (8) of the lever button (5) and the first spring element (7) penetrate the wall of the first tube (2) in at least one common opening in the catch position, or alternately, the catch projection (8) and the first spring element (7) penetrate the wall of the first tube (2) each in separate openings (9, 13) in the catch position.

6. Insertable tube system (1) for a vacuum cleaner according to any one of claims 1 to 5, **characterized in that** the second tube (3) forms a first abutment for the first spring element (7) and the bottom of the lever button (5) forms a second abutment for the first spring element (7), in particular, the first spring element (7) is able to produce a spring force between the outside of the wall of the second tube (3) and the bottom of the lever button (5) in the catch position.

7. Insertable tube system (1) for a vacuum cleaner according to any one of claims 1 to 6, **characterized in that** the first spring element (7) is pivotally held in the opening (13), in particular, two opposing moment forces can be generated by applying two opposing forces on the lever arm of the first spring element (7) using the lever button (5) and the wall of the second tube (3), wherein compression of the spring element (7) can be caused by the moments.

8. Insertable tube system (1) for a vacuum cleaner according to any one of claims 1 to 5, **characterized in that** the first spring element (7) is designed so that the wall of the first tube (2) constitutes an abutment for the first spring element (7), in particular a spring force can be produced with the first spring element (7) between the first tube (2) and the bottom of the lever button (5) and a second spring force can be produced between the first tube (2) and the outer side of the wall of the second tube (3).

9. Insertable tube system (1) for a vacuum cleaner according to any one of claims 1 to 8, **characterized in that** the second tube (3) has a single catch recess (10) and at least one electrically conductive partial region, wherein, in particular, at least the electrically conductive partial region is grounded, in particular, the second tube (3) is the handle of the vacuum cleaner.

10. Insertable tube system (1) for a vacuum cleaner according to any one of claims 1 to 8, **characterized in that** the second tube (3) has a plurality of catch recesses (10), preferably, the catch recesses (10) are continuous, in particular the first tube (2) and the second tube (3) can be shifted in one another, wherein the relative position of the tubes (2, 3) can be fixed by selective engagement of the catch projection (8) with any of the catch recesses (10) of the second tube (3).

11. Insertable tube system (1) for a vacuum cleaner, with at least one first tube (2), a second tube (3) and a coupling for detachable connection of the first tube (2) to the second tube (3), wherein the coupling has a guide element (4) and a lever button, wherein the guide element is located on an outer side of a wall of the first tube, the lever button is supported in the guide element to be able to move around a pivot axis, the lever button is movable by the force of at least a first spring element into a catch position, and the bottom of the lever button has a catch projection, wherein the wall of the first tube can be penetrated by an opening for the catch projection of the lever button, and wherein a mechanical connection between the first tube and the second tube can be produced by engagement of the catch projection with a catch recess of the second tube,
**characterized in**
**that** an electrically conductive connection between the first and second tube can be produced by the catch projection.

12. Insertable tube system for a vacuum cleaner according to claim 11, **characterized in that** a contact cap of electrically conductive material is mounted on the catch projection, an electrically conductive connection between the first and the second tube being produced by way of the contact cap at least in the catch position, preferably, the catch recess of the second tube is continuous, in particular, the catch recess is deep drawn, so that the contact cap of the catch projection can be brought into contact with the catch recess, preferably, the catch projection itself is produced of a conductive material.

13. Insertable tube system for a vacuum cleaner according to claim 11 or 12, **characterized in that** the contact cap is supported elastically on the catch projection so that an electrically conductive connection is ensured at least in the catch position of the lever button.

14. Insertable tube system for a vacuum cleaner according to any one of claims 11 to 13, **characterized by** the features of at least one characterizing part of one patent claim of the patent claims 2, 3, 4, 5, 9 or 10.

## Revendications

1. Système de tubes enfichables (1) pour un aspirateur, comprenant au moins un premier tube (2), un deuxième tube (3) et un raccord pour la connexion amovible du premier tube (2) au deuxième tube (3), le raccord présentant un élément de guidage (4) et une touche levier (5), l'élément de guidage (4) étant disposé au niveau du côté extérieur de la paroi du premier tube (2), la touche levier (5) étant supportée de manière déplaçable dans l'élément de guidage (4) autour d'un axe de basculement (6), la touche levier (5) pouvant être amenée dans une position d'encliquetage par la force d'au moins un premier élément de ressort (7), et la touche levier (5) présentant au niveau du côté inférieur un ergot d'encliquetage (8), la paroi du premier tube (2) pouvant être traversée par une ouverture (9) pour l'ergot d'encliquetage (8) de la touche levier (5), et un raccord mécanique entre le premier tube (2) et le deuxième tube (3) pouvant être réalisé par un engagement de l'ergot d'encliquetage (8) dans un évidement d'encliquetage (10) du deuxième tube (3),
**caractérisé en ce**
**qu'**au moins dans la position d'encliquetage de la touche levier (5) avec le premier élément de ressort (7), une connexion électriquement conductrice entre le premier tube (2) et le deuxième tube (3) peut être établie.

2. Système de tubes enfichables (1) pour un aspirateur selon la revendication 1, **caractérisé en ce que** la touche levier (5) peut être amenée par actionnement de la touche levier (5) à l'encontre de la force d'au moins le premier élément de ressort (7) dans une position de libération, l'ergot d'encliquetage (8) de la touche levier (5) libérant dans la position de libération un déplacement du premier tube (2) par rapport au deuxième tube (3), en particulier l'axe de basculement (6) de la touche levier (5) étant prévu approximativement à la moitié de l'étendue longitudinale de la touche levier (5), le premier élément de ressort (7) étant prévu sur un côté de la touche levier (5) et l'ergot d'encliquetage (8) étant prévu sur l'autre côté de la touche levier (5).

3. Système de tubes enfichables (1) pour un aspirateur selon la revendication 1 ou 2, **caractérisé en ce que** l'accouplement présente un deuxième élément de ressort (6a) avec lequel une force supplémentaire peut être appliquée pour amener la touche levier (5) dans la position d'encliquetage, en particulier, le deuxième élément de ressort (6a) est un ressort à barre de torsion (6a) qui constitue en même temps l'axe de basculement (6) de la touche levier (5) sur son étendue longitudinale.

4. Système de tubes enfichables (1) pour un aspirateur selon la revendication 3, **caractérisé en ce que** l'élément de guidage (4), la touche levier (5) et le deuxième élément de ressort (6a) sont réalisés d'une seule pièce, en particulier la touche levier (5) est connectée par le biais du deuxième élément de ressort (6a) à l'élément de guidage (4).

5. Système de tubes enfichables (1) pour un aspirateur selon l'une quelconque des revendications 1 à 4, **caractérisé en ce que** dans la position d'encliquetage, l'ergot d'encliquetage (8) de la touche levier (5) et le premier élément de ressort (7) traversent la paroi du premier tube (2) dans au moins une ouverture commune, ou en variante, dans la position d'encliquetage, l'ergot d'encliquetage (8) et le premier élément de ressort (7) traversent la paroi du premier tube (2) dans des ouvertures respectivement séparées (9, 13).

6. Système de tubes enfichables (1) pour un aspirateur selon l'une quelconque des revendications 1 à 5, **caractérisé en ce que** le deuxième tube (3) constitue une première butée du premier élément de ressort (7) et le côté inférieur de la touche levier (5) constitue une deuxième butée du premier élément de ressort (7), en particulier une force de ressort peut être générée avec le premier élément de ressort (7) entre le côté extérieur de la paroi du deuxième tube (3) et le côté inférieur de la touche levier (5).

7. Système de tubes enfichables (1) pour un aspirateur selon l'une quelconque des revendications 1 à 6, **caractérisé en ce que** le premier élément de ressort (7) est retenu de manière pivotante dans l'ouverture (13), en particulier deux couples opposés peuvent être générés par l'application de deux forces opposées sur les bras de levier du premier élément de ressort (7), au moyen de la touche levier (5) et de la paroi du deuxième tube (3), un écrasement de l'élément de ressort (7) pouvant être provoqué avec les couples.

8. Système de tubes enfichables (1) pour un aspirateur selon l'une quelconque des revendications 1 à 5, **caractérisé en ce que** le premier élément de ressort (7) est configuré de telle sorte que la paroi du premier tube (2) constitue une butée pour le premier élément de ressort (7), en particulier une force de ressort peut être générée avec le premier élément de ressort (7) entre le premier tube (2) et le côté inférieur de la touche levier (5), et une deuxième force de ressort peut être générée entre le premier tube (2) et le côté extérieur de la paroi du deuxième tube (3).

9. Système de tubes enfichables (1) pour un aspirateur selon l'une quelconque des revendications 1 à 8, **caractérisé en ce que** le deuxième tube (3) présente un évidement d'encliquetage unique (10) et au moins une région partielle électriquement conductrice, au moins la région partielle électriquement conductrice étant notamment mise à la terre, en particulier le deuxième tube (3) constituant la poignée d'un aspirateur.

10. Système de tubes enfichables (1) pour un aspirateur selon l'une quelconque des revendications 1 à 8, **caractérisé en ce que** le deuxième tube (3) présente une pluralité d'évidements d'encliquetage (10), de préférence les évidements d'encliquetage (10) sont sans interruption, en particulier le premier tube (2) et le deuxième tube (3) peuvent être déplacés l'un dans l'autre, une position relative des tubes (2, 3) pouvant être fixée par un engagement de l'ergot d'encliquetage (8) dans un évidement d'encliquetage quelconque (10) du deuxième tube (3).

11. Système de tubes enfichables (1) pour un aspirateur comprenant au moins un premier tube (2), un deuxième tube (3) et un raccord pour la connexion amovible du premier tube (2) au deuxième tube (3), le raccord présentant un élément de guidage et une touche levier, l'élément de guidage étant disposé au niveau du côté extérieur de la paroi du premier tube, la touche levier étant supportée de manière déplaçable dans l'élément de guidage autour d'un axe de basculement, la touche levier pouvant être amenée dans une position d'encliquetage par la force d'au moins un premier élément de ressort, et la touche levier présentant au niveau du côté inférieur un ergot d'encliquetage, la paroi du premier tube pouvant être traversée par une ouverture pour l'ergot d'encliquetage de la touche levier, et un raccord mécanique entre le premier tube et le deuxième tube pouvant être établi par un engagement de l'ergot d'encliquetage dans un évidement d'encliquetage du deuxième tube,
**caractérisé en ce**
**qu'**une connexion électriquement conductrice entre le premier et le deuxième tube peux être établie par le biais de l'arbre d'encliquetage.

12. Système de tubes enfichables pour un aspirateur selon la revendication 11 **caractérisé en ce qu'**un capuchon de contact en matériau électriquement conducteur est posé sur l'ergot d'encliquetage, une connexion électriquement conductrice peut être établie entre le premier et le deuxième tube par le biais du capuchon de contact au moins dans la position d'encliquetage, de préférence l'évidement d'encliquetage du deuxième tube est sans interruption, en particulier l'évidement d'encliquetage est embouti profond de telle sorte que le capuchon de contact de l'ergot d'encliquetage puisse être amené en contact avec l'évidement d'encliquetage, de préférence l'ergot d'encliquetage est fabriqué lui-même à partir d'un matériau conducteur.

13. Système de tubes enfichables pour un aspirateur selon la revendication 11 ou 12, **caractérisé en ce que** le capuchon de contact est supporté de manière élastique sur l'ergot d'encliquetage de telle sorte qu'une connexion électriquement conductrice soit assurée au moins dans la position d'encliquetage de la touche levier.

14. Système de tubes enfichables pour un aspirateur selon l'une quelconque des revendications 11 à 13, **caractérisé par** les caractéristiques d'au moins une partie caractérisante d'une revendication parmi les revendications 2, 3, 4, 5, 9 ou 10.
